# EUROPEAN PATENT SPECIFICATION

(11) **EP 3 395 627 B1**
(45) Date of publication and mention of the grant of the patent: **12.02.2020**
(21) Application number: 17461526.0
(22) Date of filing: 26.04.2017
(51) Int. Cl.: B60S 1/24

(54) **A MASTER LINK ROD ASSEMBLY, A WIPER SYSTEM COMPRISING SUCH AN ASSEMBLY AND A METHOD FOR ASSEMBLING A MASTER LINK ROD ASSEMBLY**
MASTER-VERBINDUNGSSTANGENANORDNUNG, WISCHERSYSTEM MIT SOLCH EINER ANORDNUNG UND VERFAHREN ZUR MONTAGE EINER MASTER-VERBINDUNGSSTANGENANORDNUNG
ENSEMBLE DE TIGE DE LIAISON PRINCIPALE, SYSTÈME D'ESSUIE-GLACE COMPRENANT UN TEL ENSEMBLE ET PROCÉDÉ D'ASSEMBLAGE D'UN ENSEMBLE DE TIGE DE LIAISON PRINCIPALE

(43) Date of publication of application: 31.10.2018
(73) Proprietor: Valeo Autosystemy SP. Z.O.O., 32-050 Skawina (PL)
(72) Inventor: Hendzel, Lukasz, 32-050 Skawina (PL); Machacz, Roman, 32-050 Skawina (PL); Orzel, Wojciech, 32-050 Skawina (PL)
(74) Representative: Callu-Danseux, Violaine

(56) References cited:
- WO-A1-2013/113606

## Description

### FIELD OF THE INVENTION

The present invention relates to a master link rod assembly for a wiper system. The present invention relates also to a wiper system comprising the master link rod assembly. The master link rod assembly and the wiper system according to the present invention are intended to be used specifically in a vehicle, more preferably in a vehicle of an off-road class. The present invention relates further to a method for assembling a master link rod assembly. Document WO 2013/113606 A1 is considered to be the prior art closest to the subject-matter of claim 1.

### BACKGROUND OF THE INVENTION

A wiper system for a vehicle comprises generally a wiper drive assembly, the drive assembly comprising a motor, usually an electric motor for driving the wiper system and a gearbox for transferring the movement to the wiper system. The wiper system comprises also a rod assembly for transferring the movement from the wiper drive assembly to at least one wiper. In a wiper system for off-road vehicles, like heavy duty vehicles, all-terrain vehicles, SUV-s, cross over vehicles, the wiper drive assembly is mounted in an engine compartment, whereas the wiper rod assembly is located outside of the engine compartment. The wiper drive assembly is connected to the wiper linkage assembly via a master link rod assembly, the master link rod assembly passing via an opening in a wall of the engine compartment.

The master link rod assembly commonly used in the wiper system, as described above, is of two-part construction. The master link rod assembly comprises one master link rod member which is mounted at the wiper drive assembly and the other link rod member which is mounted at the wiper linkage assembly. During an installation of the wiper system, one of the master link rod member is inserted into the opening in the engine compartment wall and is assembled with the other master link rod member using screws. Both master link rod members have to be assembled accurately to provide the master link rod assembly having precisely defined spatial position of the mounting points to the drive assembly and the wiper linkage assembly, both located at the opposite ends of the master link rod. The accuracy of the spatial relationship of the mounting ends of the master link rod is crucial for providing efficiency and faultlessness of the wiper system.

A conventional master link rod members known in the state of the art comprise markings for their spatial arrangement during assembling. The markings are generally triangular openings located in bodies of the master link rod members, respectively. During the adjusting the master link rod assembly, pre-assembled the master link rod members are moved along their longitudinal axis by an assembler till markings reach the position to each other indicating a proper spatial orientation of the master link rod members. Then the screws are tighten to fix the master link rod members in the adjusted position.

The problem with the above master link rod assembly is that the pre-adjusted orientation can be easily lost during tightening the screws. Moreover, when the wiper drive system is being mounted and adjusted in a vehicle, the master link rod assembly is being positioned in the engine compartment, as described above, wherein there is little space accessible for an assembler. Therefore, the access to the master link rod assembly for its mounting and adjusting is seriously obstructed. The proper adjustment of the master link rod assembly under such the conditions is quite challenging for an assembler. The risk of the improper assembling of the master link rod assembly is then high. As a consequence, proper assembling of the master link rod is quite time consuming.

Because of the above, there is still demand for a master link rod assembly which overcomes the above mentioned drawbacks of the conventional master link rod assembly.

### SUMMARY OF THE INVENTION

The first aspect of the present invention provides a master link rod assembly for a wiper system comprising a first master link rod member and a second master link rod member, whereby the first and the second master link rod members are connected with at least one fastening means, and at least one orientating means for defining spatial orientation between the first master link rod member and the second master link rod member.

The master link rod assembly according to the present invention provides the assembly which allows to be easily and reliably assembled with the requested spatial orientation of the members of the master link rod assembly. The master link rod assembly according to the invention allows to be easily and reliably assembled and adjusted in a constrained space in a vehicle, especially in an engine compartment of the vehicle.

According to the invention, the orientating means comprises a first orientating component comprised in the first master link rod member and a second orientating component comprised in the second master link rod member, the first and the second components of the orientating means cooperatively engaging each other. Use of the orientating means engaging cooperatively allows to orientate the first and the second members in the master link rod assembly more efficiently.

According to the invention, one of the first and the second orientating components is a male component, and the other one is a female component. The male and the female components provide self-complementary orientating means improving efficiency of assembling the master link rod assembly.

In a preferred embodiment of the master link rod assembly, the male component is a protrusion.

In yet another embodiment of the master link rod assembly, the male component has the width variable with the distance from the surface of the master link rod member.

In further embodiment of the master link rod assembly, the width of the male component decreases with the increase of the distance from the surface of the first master link rod member.

In another preferred embodiment of the master link rod assembly, the male component has a truncated cone-like shape.

In yet another embodiment of the master link rod assembly, an angle α between the side walls of the male component is in the range from about 10 to about 30 degrees, preferably is about 20 degrees.

Providing the male component of the orientating means with variable width, especially the male component having cone-like shape, facilitates engaging the male component of the orientating means during assembling the master link rod members.

In a preferred embodiment of the master link rod assembly, the female component is a recess.

In another embodiment of the master link rod assembly, the female component is a through-hole.

In yet another preferred embodiment of the master link rod assembly, the female component has the width variable with the distance from the surface of the master link rod member.

In further preferred embodiment of the master link rod assembly, the width of the female component decreases with the increase of the distance into the interior of the second master link rod member.

In a preferred embodiment of the master link rod assembly, the female component has a cone-like shape.

In another preferred embodiment of the master link rod assembly, an angle β between the side walls of the female component is in the range from about 50 to about 70 degrees, preferably is about 60 degrees.

Providing the female component of the orientating means with variable width, especially the female component having cone-like shape, facilitates engaging the female component of the orientating means during assembling the master link rod members.

In a preferred embodiment of the master link rod assembly, the female component is elongated transversely in relation to the length of the second master link rod member. By providing the elongated female component being transversely oriented in relation to the length of the second master link rod member facilitates assembling said member in the master link rod assembly wherein the precision of the spatial orientation in the assembly is considered to be important in longitudinal direction only, whereas the transversal inaccuracy of the spatial orientation in said assembly is acceptable or is not an issue at all.

In further preferred embodiment of the master link rod assembly, the male component and the female component are adapted to form the tight fit engagement. The tight fit engagement of the male and the female components of the orientating means improves further strength and reliability of joining of the first and the second master link rod members.

Further aspect of the present invention provides a wiper system comprising the master link rod assembly, as specified above. The wiper system is allowed to be easily and reliably assembled, wherein the master link rod comprises the master link rod components in the requested spatial orientation. The wiper system according to the invention is allowed to be easily and reliably mounted and adjusted in a vehicle in a constrained space in of such a vehicle, especially in an engine compartment of the vehicle.

Yet another aspect of the present invention provides a method for assembling a master link rod assembly for a wiper system, the master link rod assembly comprising a first master link rod member and a second master link rod member, wherein the first and the second master link rod members are connected with at least one fastening means and at least one orientating means for defining spatial orientation between the first master link rod member and the second master link rod member, the orientating means comprising a first orientating component (5) comprised in the first master link rod member (2) and a second orientating component (6) comprised in the second master link rod member (3), one of the first and second orientating components (5, 6) being a male component and the other of the first and second orientating components (5, 6) being a female component, the method comprising the steps of providing the first and the second master link rod members, putting together first and the second master link rod members and engaging the orientating means for defining the spatial orientation between the first master link rod member and the second master link rod member, fixing the fastening means for joining the first master link rod member and the second master link rod member and affixing their spatial orientation.

The method allows for easy and reliable assembling the master link rod assembly having the requested spatial orientation of the members of said assembly. Moreover, the method according to the invention allows to easy and reliable assembly and adjust the master link rod assembly in a constrained space in a vehicle, especially in an engine compartment of the vehicle.

In a preferred embodiment of the method for assembling a master link rod assembly, the step of putting together the first and the second master link rod members and engaging the orientating means comprises placing the first and the second master link rod members longitudinally next to each other, wherein the first master link rod member is above the second master link rod member and the orientating means are in a vicinity, moving longitudinally at least one of the first and the second master link rod members in relation to other one for positioning the orientating means, engaging the orientating means for defining the spatial orientation between the first master link rod member and the second master link rod member.

In a preferred embodiment of the method for assembling a master link rod assembly, between the step of providing the first and the second master link rod members and the step of putting together the first and the second master link rod members and engaging the orientating means, the method comprises a step of prefixing the first and the second master link rod members with the fastening means for constraining movement range of the first and the second master link rod members in relation to each other. Prefixing of the fastening means improves further efficiency of assembling the master link rod assembly.

### BRIEF DESCRIPTION OF THE DRAWINGS

Further characteristics and advantages of the invention will become more apparent from the following detailed description of preferred, but not exclusive, embodiments of the invention, illustrated by way of non-limiting example in the accompanying drawings, wherein:
Fig. 1 shows a perspective view of one master link rod member of the master link rod assembly according to the present invention,
Fig. 2 shows a cross-section of a part of a preferred embodiment of the master link rod member from fig. 1, taken along line A-A,
Fig. 3 shows a cross-section of a part of another preferred embodiment of the master link rod member from fig. 1, taken along line A-A,
Fig. 4 shows a perspective view of other master link rod member of the master link rod assembly according to the present invention,
Fig. 5 shows a cross-section of a part of a preferred embodiment of the master link rod member from fig. 4, taken along line B-B,
Fig. 6 shows a cross-section of a part of another preferred embodiment of the master link rod member from fig. 4, taken along line B-B,
Fig. 7 shows a perspective view of a master link rod assembly according to the present invention,
Fig. 8 shows a cross-section of the master link rod assembly from fig. 7, taken along line C-C,
Fig. 9 shows a fragment of the cross-section the master link rod members assembly from fig. 8,
Fig. 10 shows schematically assembling of the master link rod assembly according to one preferred embodiment of the invention,
Fig. 11 shows a part of a wiper drive system comprising the master link rod assembly according to the present invention,
Fig. 12 shows a wiper system comprising the master link rod assembly according to the present invention.

### DETAILED DESCRIPTION OF THE PREFERRED EMBODIMENTS

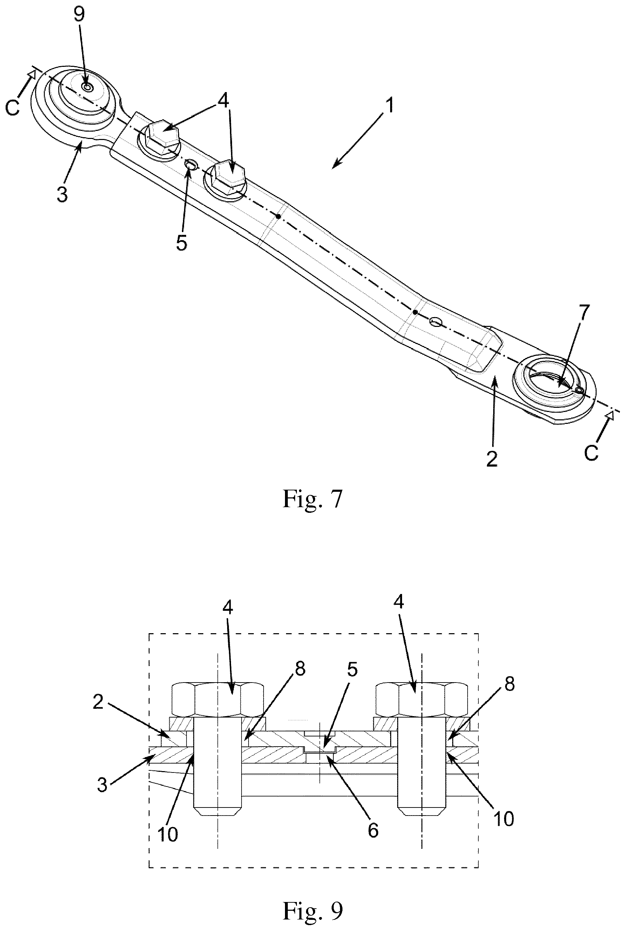

Referring now to drawings, and initially to fig. 7 to 9, a master link rod assembly 1 according to one embodiment of the present invention is shown. The master link rod assembly 1 comprises a first master link rod member 2 and a second master link rod member 3.

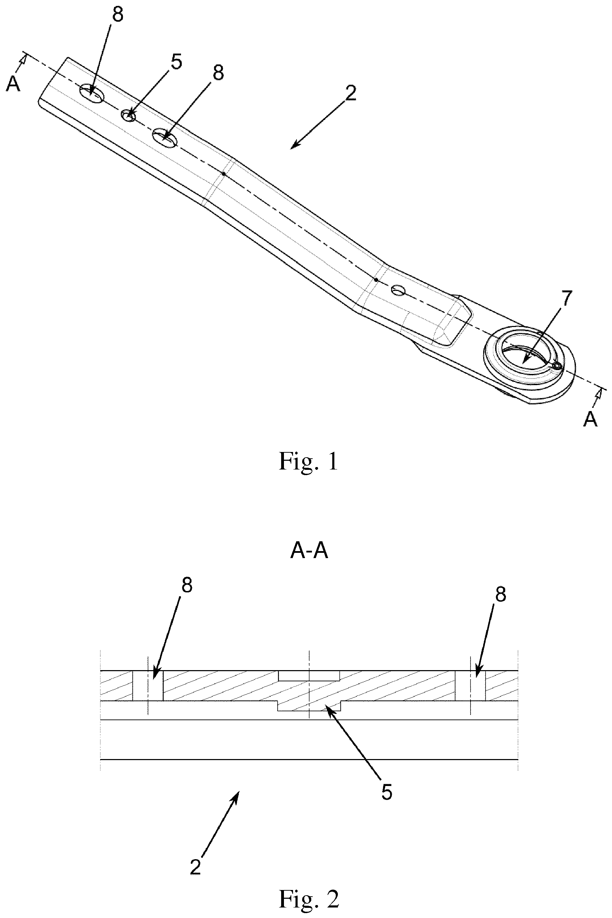

As shown in fig, 1, the first master link rod member 2 is a longitudinal element. The first master link rod member 2 comprises an socket 7 at one of its end, the socket 7 being adapted for mounting on a pivot crank. In a preferred embodiment of the invention, the first master link rod member 2 comprises two assembling holes 8 at its second end. In a preferred embodiment of the intention, as shown in fig. 1, the assembling holes 8 are arranged in a distance along the length of the first master link rod member 2. The assembling holes 8 are adapted for assembling the master link rod assembly 1 with fastening means 4. In a preferred embodiment of the invention, as shown in fig. 1, the holes 8 in the first master link rod member 1 are elongated along the length of the first master link rod member 2 to provide ability of longitudinal adjustment of the first master link rod member 2 during its assembly in the master link rod assembly 1, as described in more details below.

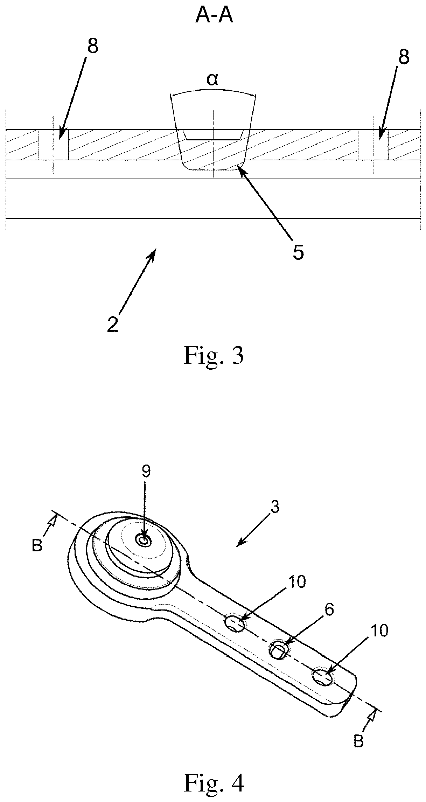

The first master link rod member 2 comprises further a first orientating component 5 of the orientating means for spatial orientating the first master link rod member 2 in the master link rod assembly 1. In a preferred embodiment of the present intention, the first orientating component 5 is located between the assembling holes 8, as shown in fig. 1. The first orientating component 5 is a male component, *i.e*., the orientating component 5 of the orientating means of the first master link rod component 2 is in form of a protrusion extending out of the surface of the first master link rod member 2, the protrusion for being placed in the corresponding female component of the orientating means of other master link rod member. In a preferred embodiment of the invention the first orientating component 5 is realized by a stamp mark, as shown in figs. 1 to 3, wherein the protrusion of the stamp mark extending out the surface of the first master link rod member 2 is for being placed in the corresponding female component, as described above. In another preferred embodiment of the invention, the male component is a pin (not shown in figs.) extending from the surface of the first master link rod member 2. In a preferred embodiment, the male component of the first orientating component 5 has the width variable with the distance from the surface of the first master link rod member 2. The width of the male component of the first orientating component 5 decreases with the increase of the distance from the surface of the first master link rod member 2. In a preferred embodiment of the invention the male component has slant side walls, as shown in fig. 3, having a truncated cone like shape. An angle α defined by the slant side walls of the male component in the range from about 10 to about 30 degrees. Preferably the angle α is about 20 degrees. In yet another preferred embodiment of the invention the male component of a variable width is in form of a protrusion having a hemisphere-like shape (not shown in figs.). The male component of the first orientating component 5 of the orientating means in the first master link rod member 2 may also be realized by any other protrusion or its equivalent and of any shape being adapted for engaging with the corresponding female component of the orientating means of other master link rod member, as described above.

As shown in fig. 4, the second master link rod member 3 is also a longitudinal element. The second master link rod member 3 comprises a socket 9 at one of its end adapted for mounting on a pivot. In a preferred embodiment of the invention the second master link rod member 3 comprises two assembling holes 10 at its second end. In a preferred embodiment of the invention, as shown in fig. 4, the assembling holes 10 are arranged in a distance along the length of the second master link rod member 3. The position of the assembling holes 10 of the second master link rod member 3 corresponds to the position of the assembling holes 8 of the first master link rod member 2. The assembling holes 10 are adapted for assembling the second master link rod member 3 with the first master link rod member 2 into the master link rod assembly 1 according to the invention with fastening means 4. In a preferred embodiment of the invention, the assembling holes 10 of the second master link rod member 3 are provided with threads for assembling with screws, the screws being the fastening means 4.

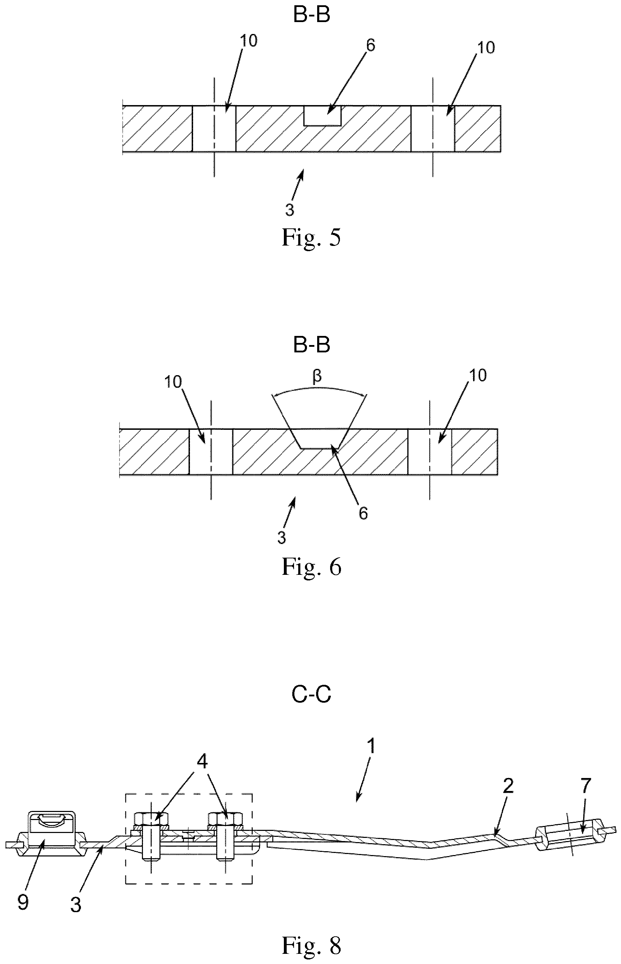

The second master link rod member 3 comprises further a second orientating component 6 of the orientating means for spatial orientating the second master link rod member 3 in the master link rod assembly 1 in cooperation with the first orientating component 5 of the orientating means provided on the first master link rod member 2. In a preferred embodiment of the present invention, the second orientating component 6 is located between the assembling holes 10, as shown in fig. 4. The second orientating component 6 is a female component, *i.e*., the second orientating means 6 of the orientating means is in a form of a void extending internally from the surface of the second master link rod member 3, as shown in fig. 5, for accepting the corresponding male component of the first orientating component 5 of the first master link rod member 2. In a preferred embodiment of the invention, the female component is realized by a recess, as shown in figs. 4 to 6. In another preferred embodiment of the present invention, the female component is a hole extending through the second master link rod member 3, as shown in fig. 9. In yet another preferred embodiment of the invention, the female component of the second orientating component 6 of the orientating means is realized by a stamp mark (not shown in figs.), wherein the recess of the stamp mark is for accepting the corresponding male component of the first orientating component 5 of the orientating means of the first master link rod member 2, for example, but not limited to, for accepting the protrusion of the counter stamp mark of the first master link rod member 2. In a preferred embodiment of the invention the female component of the second orientating component 6 has the width variable with the distance. The width of the female component of the second orientating component 6 decreases with the increase of the distance into the interior of the second master link rod member 3. In a preferred embodiment of the invention, the female component has slant side walls, as shown in fig. 6, having a cone-like shape. An angle β defined by the slant side walls of the female component is in the range from about 50 to about 70 degrees. Preferably the angle β is about 60 degrees. In yet another preferred embodiment of the invention, the female component of a variable widths is in a form of a recess having a hemisphere-like shape. The female component of the second orientating component 6 of the orientating means may also be realized by any other recess or its equivalent and of any other shape being adapted for engaging with the corresponding male component of the first orientating component of the orientating means of the first master link rod member 2, as described above.

In yet another preferred embodiment of the invention, the female component of the second orientating component 6 of the orientating means is elongated transversely in relation to the length, *i.e*., in relation to the longitudinal axis of the second master link rod member 3. By providing the elongated female component being transversely oriented in relation to the length of the second master link rod member 3 facilitates assembling said member 3 in the master link rod assembly according to the present invention, wherein the precision of the spatial orientation in the assembly 1 is considered to be important in longitudinal direction only, whereas the transversal inaccuracy of the spatial orientation in said assembly 1 is acceptable or the precision in said transversal direction not an issue at all.

In a preferred embodiment of the invention, the male and the female components of the first and the second orientating components 5, 6 are adapted to form a tight fit engagement. In one of such preferred embodiments the male component of a cone-like shape has width its adjacent to the surface of the first master link rod member 2 bigger than the width of the female component at the surface of the second master link rod member 3. In such a case, during assembling the first and the second master link rod members 2, 3 into the master link rod assembly 1 according to the invention, the male and the female components forms an interference fit.

The first orientating component 5 of the first master link rod member 2 and the second orientating component 6 of the second master link rod member 3 form together the orientating means. The first and the second orientating components 5, 6 of the orientating means are located on the first master link rod member 2 and the second master link rod member 3 respectively, in such a way that they provide the requested and unambiguous spatial orientation between said the first and the second master link rod members 2, 3. More specifically, the orientating means, as described above, assures the requested distance between the opposite sockets 7, 9 for mounting pivot cranks located at the opposite ends of the first and the second master link rod members 2, 3, respectively, when assembled in the master link rod assembly 1 according to the invention. Alternatively or additionally, the orientating means, as described above, assures the requested geometrical relationship of the axes of said sockets 7, 9, when said master link rod members 2, 3 are assembled into the master link rod assembly 1 according to the invention.

As shown in fig. 7, the master link rod assembly 1 according to the invention comprises the first master link rod member 2 and the second link rod member 3. The first and the second link rod members 2, 3 are joined together with fastening means 4. The fastening means 4 provides a robust and reliable coupling of the master link rod member 2, 3 together. In one of the preferred embodiment of the invention, wherein the first master link rod member 2 comprises two elongated assembling holes 8 and the second master link rod member 3 comprises two threaded assembling holes 10, the fastening means 4 comprises two screws, as shown in figs. 7 to 9. As shown in fig. 9, screws pass through the assembling holes 8 of the first master link rod member 2 and are screwed suitably in the corresponding assembling holes 10 of the second master link rod member 3. Another fastening means 4 may be used to provide robust and reliable coupling of the first master link rod member 2 with the second master link rod member 3. For example, but without limitation to, the fastening means 4 may be rivets, especially pop rivets, quick couplings, etc. It is also considered to use permanent fastening as the fastening means 4. For example, but without limitation, the first and the second master link rod members 2, 3 may by coupled with spot welding and other equivalent fast permanent fastening.

In the assembled state of the master link rod assembly 1 according to the invention, the first orientating component 5 of the first master link rod member 2 is engaged with the second orientating component 6 of the second master link rod member 3. In a preferred embodiment of the invention, the male component of the first master link rod member 2 is disposed in the female component of the second master link rod member 3, as shown in figs. 8 and 9. As a consequence, the first master link rod member 2 and the second master link rod member 3 are in the master link rod assembly 1 in a previously specified spatial orientation. More specifically, the sockets 7, 9 for mounting pivots of the first and the second master link rod members 2, 3, respectively are located at a desired distance from each other. Alternatively or additionally, the axes of said sockets 7, 9 are in a desired geometrical relationship to each other.

In the assembled state of the master link rod assembly 1 according to a preferred embodiment of the invention, wherein the first orientating component 5 of the first master link rod member 2 and the second orientating component 6 of the second master link rod member 3 are adapted to form a tight fit engagement, as described above, said orientating components 5, 6 are engaged forming the interference fit improving further coupling and rigidity of the master link rod assembly 1.

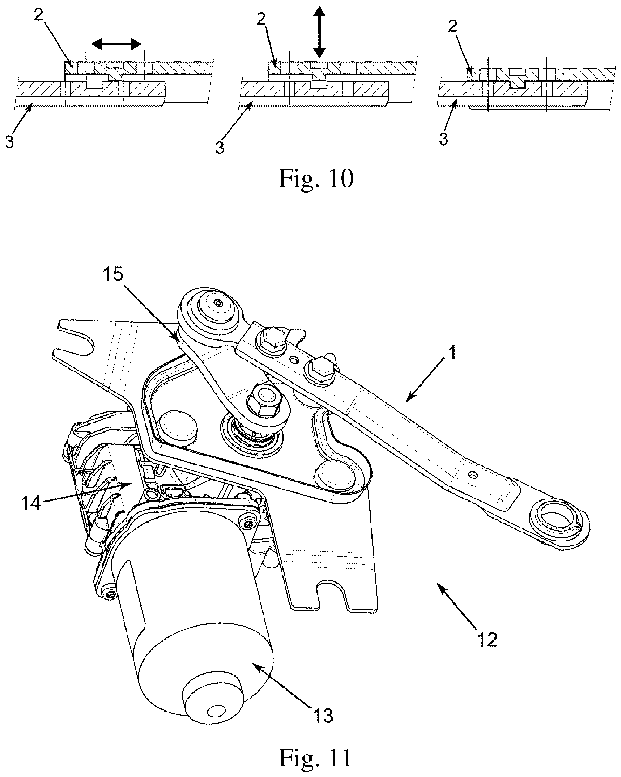

Now the method of assembling the master link rod assembly 1 according to the invention will be described. The method of assembling the master link rod assembly 1 is shown schematically in fig. 10 for one of the preferred embodiments of the invention. The fastening means 4 are omitted in fig. 10 for clarity.

In one preferred embodiment of the invention, the first master link rod member 2 and the second master link rod member 3 are pre-assembled. In such a state, the first master link rod member 2 is located above the second master link rod member 3, wherein the first orientating component 5 is located in a vicinity of the second orientating component 6 in a longitudinal direction of the master link rod members 2, 3, as shown in fig. 10 at the left. In the pre-assembled state of the master link rod assembly 1, the lateral orientation of said first and the second orientating components 5, 6 are generally correct, *i.e.*, the first and the second orientating component 5, 6 are aligned. The first orientating component 5 of the first master link rod member 2 may be in contact with the second master link rod member 3, or said component 5 may be just above the second master link rod member 3. In the pre-assembled state, the first and the second master link rod members 2, 3 are allowed to move in relation to each other in a longitudinal direction only. Next, one of the first and the second master link rod member 2, 3 is moved longitudinally along the other one to reach the position, wherein the first orientating means 5 of the first master link rod member 2 is located just next to the second orientating component 6 of the second master link rod member 3, as shown in fig. 10 in the middle. Then the first and the second orientating components 5, 6 engage each other, as shown in fig. 10 at the right, providing the spatial orientation of the first and the second master link rod members 2, 3, as described above. The moment of the engagement of the first and the second orientating components 5, 6 is detected by an assembler by sensing a sound a single knock, cling or click and/or by sensing a "falling" and blocking further movement of the first and the second master link rod members 2, 3 in relation to themselves. After engagement of the first and the second orientating components 5, 6, the fastening means 4 are installed to secure the assembled master link rod assembly 1 according to the invention, wherein the spatial orientation of the first and the second master link members 2, 3 is as described above. In a preferred embodiment of the invention, the installation of the fastening means 4 comprises screwing screw into the threaded assembling holes 10 of the second master link rod member 3 through the assembling holes 8 of the first master link rod member 2 to obtain the master link rod assembly 1, as shown in fig. 7. The installation of the fastening means 4 may also involve riveting, welding, etc., for additional and/or alternative fastening means 4, as described above.

The moment of the engagement, as described above, is, therefore, easily and unequivocally detected by an assembler assembling the master link rod assembly 1 according to the invention. The method is especially useful when the assembly 1 is assembled and adjusted in a constrained space in a vehicle, especially in an engine compartment of the vehicle.

In other preferred embodiment of the invention the pre-assembling step comprises pre-mounting fastening means 4. In such a case, the master link rod assembly 1 is pre-joined and the first and the second master link rod members 2, 3 have the pre-assembled arrangement, as described above. In the pre-assembled state of the master link rod assembly 1, the first and the second master link rod members 2, 3 are longitudinally movable, as described above, but the longitudinal movement is constrained to the area in the vicinity of the first and the second orientating component 5, 6. Next, the master link rod assembly 1 is assembled, as described above. The last step of assembling of the master link rod assembly 1 according to the invention involves the final fastening the fastening means 4, as described above. Pre-mounting of the fastening means 4 prevents from moving one of the first and the second master link rod member 2, 3 too far or in a wrong direction. Pre-mounting of the fastening means 4 prevents also from accidental disassembling arrangement of the first and the second master link rod members 2, 3, as described above and shown in fig. 10 at the left and in the middle. Pre-mounting of the fastening means 4 improves further efficiency of assembling the master link rod assembly 1 according to the invention and, therefore, saves further costs of assembling the master link rod assembly 1.

In a preferred embodiment of the invention, wherein the fastening means 4 comprises two screws, the pre-installation of the fastening means 4 comprises screwing screws into the threaded assembling holes 10 of the second master link rod member 3 through the assembling holes 8 of the first master link rod member 2 just to "catch" the assembling holes 10 with the screws. The first and the second master link rod members 2, 3 are still movable, as described above. The final fastening of the fastening means 4, as described above, involves just tightening the screws to obtain the master link rod assembly 1, as shown in fig. 7.

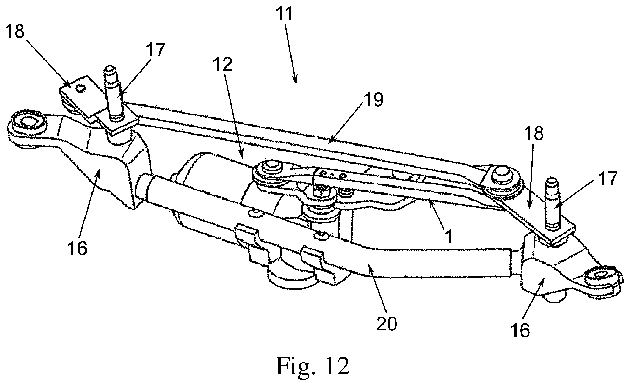

The master link rod assembly 1 according to the invention is used in a wiper system 11 for a vehicle, especially for a vehicle of an off-road class. As shown in fig. 12, the wiper system 11 comprises a driving unit 12 comprising a motor 13, usually an electric motor, a gearbox 14 for transferring the movement from a motor 13. The drive unit 12 comprises further a lever 15 fixedly mounted with its one end on a driving shaft extending from the gearbox 14 of the drive unit 12. The master link rod assembly 1 according to the invention is pivotably mounted with its one end on the end of the lever 15, opposite to the first end. As shown in fig. 12, the wiper system 11 comprises further two pivot shaft housings 16, each supporting rotationally a wiper pivot shaft 17 therein. The wiper system 11 includes also two cranks 18 fixedly coupled at one of their ends with the wiper pivot shaft 17, respectively. The wiper system 11 comprises a link assembly 19 pivotably coupled with the respective ends of the cranks 18, opposite to the ends of crank mounted to the respective pivot shafts 17. The master link rod assembly 1 according to the invention is pivotably coupled with its other end with one of the cranks 18 at the end of mounting of the link assembly, as shown in fig. 12, for transferring the movement from the driving unit 12 to the crank 18 and further to the wiper system 11. The wiper system 11 comprises a frame tube 20 attached to the driving unit for supporting the pivot shaft housings 16.

The wiper system 11 comprising the master link rod assembly 1 according to the invention is analogous to ones known from the state of the art, but comprising the conventional master link rod. Therefore, the principles of working of the wiper system 11 comprising the master link rod assembly 1 according to the inversion are in fact the same and will not be discussed here in more details.

The wiper system takes advantages of the master link rod assembly 1 according to the invention as such and a method of its assembling, both as described above.

The invention, especially its preferred embodiments, is described herein by way of example only. All the technical features, including those in the preferred embodiments, as described herein, may be combined to any extent and in any combination. All the possible combinations of the technical features are considered as being fully and unambiguously disclosed herein as a complete and unequivocal individual embodiments of the present invention.

As described hereinabove, the present invention solves many problems associated with the master link rod assemblies and the wiper systems known in the state of the art. It should be appreciated that various changes in the components and arrangements, which have been described and illustrated herein in order to explain the nature of the invention, may be made by these skilled in the art without departing from the principle and scope of the invention, as defined in the appended claims.

### Definitions

- 1: a master link rod assembly
- 2: a first master link rod member of the master link rod assembly 1
- 3: a second master link rod member of the master link rod assembly 1
- 4: fastening means
- 5: a first orientating component of the orientating means in the first master link rod member 2
- 6: a second orientating component of the orientating means in the second master link rod member 3
- 7: a socket for a pivot in the first master link rod member 2
- 8: assembling holes in the first master link rod member 2
- 9: a socket for a pivot in the second master link rod member 3
- 10: assembling holes in the second master link rod member 3
- 11: a wiper system
- 12: a driving unit of the wiper system 11
- 13: a motor
- 14: a gearbox
- 15: a lever of the driving unit 12
- 16: a pivot shaft housing
- 17: a wiper pivot shaft
- 18: a crank
- 19: a link assembly
- 20: a frame tube

## Claims

1. A master link rod assembly (1) for a wiper system comprising a first master link rod member (2) and a second master link rod member (3), whereby, the first and the second master link rod members (2, 3) are connected with at least one fastening means (4), and at least one orientating means for defining spatial orientation between the first master link rod member (2) and the second master link rod member (3), the orientating means comprising a first orientating component (5) comprised in the first master link rod member (2) and a second orientating component (6) comprised in the second master link rod member (3), the first and the second components (5, 6) of the orientating means cooperatively engaging each other, **characterized in that** one of the first and second orientating components being a male component and the other of the first and second orientating components being a female component.

2. The master link rod assembly (1) according to claim 1, wherein the male component is a protrusion.

3. The master link rod assembly (1) according to claim 1, wherein the male component has the width variable with the distance from the surface of the master link rod member (2, 3).

4. The master link rod assembly (1) according to claim 3, wherein the width of the male component decreases with the increase of the distance from the surface of the master link rod member (2, 3).

5. The master link rod assembly (1) according to claim 4, wherein the male component has a truncated cone-like shape.

6. The master link rod assembly (1) according to claim 5, wherein an angle α between the side walls of the male component is in the range from about 10 to about 30 degrees, preferably is about 20 degrees.

7. The master link rod assembly (1) according to claim 1, wherein the female component is a recess.

8. The master link rod assembly (1) according to claim 1, wherein the female component is a through-hole.

9. The master link rod assembly (1) according to claim 1, wherein the female component has the width variable with the distance from the surface of the master link rod member (2, 3).

10. The master link rod assembly (1) according to claim 9, wherein the width of the female component decreases with the increase of the distance into the interior of the master link rod member (2, 3).

11. The master link rod assembly (1) according to claim 10, wherein the female component has a cone-like shape.

12. The master link rod assembly (1) according to claim 11, wherein an angle β between the side walls of the female component is in the range from about 50 to about 70 degrees, preferably is about 60 degrees.

13. The master link rod assembly (1) according to claim 1, wherein the female component is elongated transversely in relation to the length of the master link rod member (2, 3).

14. The master link rod assembly (1) according to claim 1, wherein the male component and the female component are adapted to form a negative allowance engagement.

15. A wiper system 11 comprising the master link rod assembly (1) as specified in claims 1 to 14.

16. A method for assembling a master link rod assembly (1) for a wiper system, the master link rod assembly comprising a first master link rod member (2) and a second master link rod member (3), wherein the first and the second master link rod members (2, 3) are connected with at least one fastening means (4) and at least one orientating means for defining spatial orientation between the first master link rod member (2) and the second master link rod member (3), the orientating means comprising a first orientating component (5) comprised in the first master link rod member (2) and a second orientating component (6) comprised in the second master link rod member (3), one of the first and second orientating components (5, 6) being a male component and the other of the first and second orientating components (5, 6) being a female component, the method comprising the steps of
providing the first and the second master link rod members (2, 3),
putting together first and the second master link rod members (2, 3) and engaging the orientating means for defining the spatial orientation between the first master link rod member (2) and the second master link rod member (3),
fixing the fastening means (4) for joining the first master link rod member (2) and the second master link rod member and affixing their spatial orientation.

17. The method for assembling a master link rod assembly according to claim 16, wherein the step of putting together the first and the second master link rod members (2, 3) and engaging the orientating means comprises
placing the first and the second master link rod members (2, 3) longitudinally next to each other, wherein the first master link rod member (2) is above the second master link rod member (3) and the orientating means are in a vicinity,
moving longitudinally at least one of the first and the second master link rod members (2, 3) in relation to another one for positioning the orientating means,
engaging the orientating means for defining the spatial orientation between the first master link rod member (2) and the second master link rod member (3).

18. The method for assembling a master link rod assembly according to claim 16, wherein between the step of providing the first and the second master link rod members (2, 3) and the step of putting together the first and the second master link rod members (2, 3) and engaging the orientating means, the method comprises a step of prefixing the first and the second master link rod members (2, 3) with the fastening means (4) for constraining movement range of the first and the second master link rod members (2, 3) in relation to each other.

## Patentansprüche

1. Hauptverbindungsstangenanordnung (1) für ein Wischersystem, umfassend ein erstes Hauptverbindungsstangenelement (2) und ein zweites Hauptverbindungsstangenelement (3), wobei das erste und das zweite Hauptverbindungsstangenelement (2, 3) mit zumindest einem Befestigungsmittel (4) und zumindest einem Ausrichtungsmittel zum Definieren einer räumlichen Ausrichtung zwischen dem ersten Hauptverbindungsstangenelement (2) und dem zweiten Hauptverbindungsstangenelement (3) verbunden sind, wobei das Ausrichtungsmittel eine im ersten Hauptverbindungsstangenelement (2) enthaltene erste Ausrichtungskomponente (5) und eine im zweiten Hauptverbindungsstangenelement (3) enthaltene zweite Ausrichtungskomponente (6) umfasst, wobei die erste und die zweite Komponente (5, 6) des Ausrichtungsmittels zusammenwirkend ineinandergreifen, **dadurch gekennzeichnet, dass**
eine der ersten und der zweiten Ausrichtungskomponente eine männliche Komponente ist und die andere der ersten und der zweiten Ausrichtungskomponente eine weibliche Komponente ist.

2. Hauptverbindungsstangenanordnung (1) nach Anspruch 1, wobei die männliche Komponente ein Vorsprung ist.

3. Hauptverbindungsstangenanordnung (1) nach Anspruch 1, wobei die männliche Komponente eine Breite aufweist, die mit dem Abstand zur Fläche des Hauptverbindungsstangenelements (2, 3) veränderlich ist.

4. Hauptverbindungsstangenanordnung (1) nach Anspruch 3, wobei die Breite der männlichen Komponente mit zunehmendem Abstand zur Fläche des Hauptverbindungsstangenelements (2, 3) abnimmt.

5. Hauptverbindungsstangenanordnung (1) nach Anspruch 4, wobei die männliche Komponente eine kegelstumpfartige Form aufweist.

6. Hauptverbindungsstangenanordnung (1) nach Anspruch 5, wobei ein Winkel α zwischen den Seitenwänden der männlichen Komponente im Bereich von etwa 10 bis etwa 30 Grad, vorzugsweise etwa 20 Grad, liegt.

7. Hauptverbindungsstangenanordnung (1) nach Anspruch 1, wobei die weibliche Komponente eine Aussparung ist.

8. Hauptverbindungsstangenanordnung (1) nach Anspruch 1, wobei die weibliche Komponente ein Durchgangsloch ist.

9. Hauptverbindungsstangenanordnung (1) nach Anspruch 1, wobei die weibliche Komponente eine Breite aufweist, die mit dem Abstand zur Fläche des Hauptverbindungsstangenelements (2, 3) veränderlich ist.

10. Hauptverbindungsstangenanordnung (1) nach Anspruch 9, wobei die Breite der weiblichen Komponente mit zunehmendem Abstand zum Inneren des Hauptverbindungsstangenelements (2, 3) abnimmt.

11. Hauptverbindungsstangenanordnung (1) nach Anspruch 10, wobei die weibliche Komponente eine kegelartige Form aufweist.

12. Hauptverbindungsstangenanordnung (1) nach Anspruch 11, wobei ein Winkel β zwischen den Seitenwänden der weiblichen Komponente im Bereich von etwa 50 bis etwa 70 Grad, vorzugsweise etwa 60 Grad liegt.

13. Hauptverbindungsstangenanordnung (1) nach Anspruch 1, wobei die weibliche Komponente in Bezug auf die Länge des Hauptverbindungsstangenelement (2, 3) quer gestreckt ist.

14. Hauptverbindungsstangenanordnung (1) nach Anspruch 1, wobei die männliche Komponente und die weibliche Komponente dazu ausgelegt sind, einen Übermaßeingriff auszubilden.

15. Wischersystem 11, umfassend die Hauptverbindungsstangenanordnung (1) nach Anspruch 1 bis 14.

16. Verfahren zum Montieren einer Hauptverbindungsstangenanordnung (1) für ein Wischersystem, wobei die Hauptverbindungsstangenanordnung ein erstes Hauptverbindungsstangenelement (2) und ein zweites Hauptverbindungsstangenelement (3) umfasst, wobei das erste und das zweite Hauptverbindungsstangenelement (2, 3) mit zumindest einem Befestigungsmittel (4) und zumindest einem Ausrichtungsmittel zum Definieren einer räumlichen Ausrichtung zwischen dem ersten Hauptverbindungsstangenelement (2) und dem zweiten Hauptverbindungsstangenelement (3) verbunden sind, wobei das Ausrichtungsmittel eine im ersten Hauptverbindungsstangenelement (2) enthaltene erste Ausrichtungskomponente (5) und eine im zweiten Hauptverbindungsstangenelement (3) enthaltene zweite Ausrichtungskomponente (6) umfasst, wobei eine der ersten und der zweiten Ausrichtungskomponente (5, 6) eine männliche Komponente ist und die andere der ersten und der zweiten Ausrichtungskomponente (5, 6) eine weibliche Komponente ist, wobei das Verfahren die folgenden Schritte umfasst:
Bereitstellen des ersten und des zweiten Hauptverbindungsstangenelements (2, 3),
Zusammensetzen des ersten und des zweiten Hauptverbindungsstangenelements (2, 3) und Ineingriffbringen der Ausrichtungsmittel, um die räumliche Ausrichtung zwischen dem ersten Hauptverbindungsstangenelement (2) und dem zweiten Hauptverbindungsstangenelement (3) zu definieren,
Befestigen des Befestigungsmittels (4), um das erste Hauptverbindungsstangenelement (2) und das zweite Hauptverbindungsstangenelement zu verbinden und ihre räumliche Ausrichtung zu sichern.

17. Verfahren zum Montieren einer Hauptverbindungsstangenanordnung nach Anspruch 16, wobei der Schritt des Zusammensetzens des ersten und des zweiten Hauptverbindungsstangenelements (2, 3) und des Ineingriffbringens der Ausrichtungsmittel Folgendes umfasst:
Anordnen des ersten und des zweiten Hauptverbindungsstangenelements (2, 3) längs nebeneinander, wobei sich das erste Hauptverbindungsstangenelement (2) über dem zweiten Hauptverbindungsstangenelement (3) befindet und sich die Ausrichtungsmittel in der Nähe befinden,
Bewegen zumindest eines des ersten und des zweiten Hauptverbindungsstangenelements (2, 3) in Längsrichtung in Bezug aufeinander, um die Ausrichtungsmittel zu positionieren,
Ineingriffbringen der Ausrichtungsmittel, um die räumliche Ausrichtung zwischen dem ersten Hauptverbindungsstangenelement (2) und dem zweiten Hauptverbindungsstangenelement (3) zu definieren.

18. Verfahren zum Montieren einer Hauptverbindungsstangenanordnung nach Anspruch 16, wobei zwischen dem Schritt des Bereitstellens des ersten und des zweiten Hauptverbindungsstangenelements (2, 3) und dem Schritt des Zusammensetzens des ersten und des zweiten Hauptverbindungsstangenelements (2, 3) und des Ineingriffbringens der Ausrichtungsmittel das Verfahren einen Schritt des Vorfixierens des ersten und des zweiten Hauptverbindungsstangenelements (2, 3) mit dem Befestigungsmittel (4) umfasst, um einen Bewegungsbereich des ersten und des zweiten Hauptverbindungsstangenelements (2, 3) in Bezug aufeinander einzuschränken.

## Revendications

1. Ensemble tige de liaison principale (1) pour un système d'essuie-glace comprenant un premier élément de tige de liaison principale (2) et un deuxième élément de tige de liaison principale (3), les premier et deuxième éléments de tige de liaison principale (2, 3) étant raccordés avec au moins un moyen d'assujettissement (4), et au moins un moyen d'orientation pour définir une orientation spatiale entre le premier élément de tige de liaison principale (2) et le deuxième élément de tige de liaison principale (3), le moyen d'orientation comprenant un premier composant d'orientation (5) compris dans le premier élément de tige de liaison principale (2) et un deuxième composant d'orientation (6) compris dans le deuxième élément de tige de liaison principale (3), les premier et deuxième composants (5, 6) du moyen d'orientation se mettant en prise l'un avec l'autre de façon coopérative, **caractérisé en ce que** l'un des premier et deuxième composants d'orientation est un composant mâle et l'autre des premier et deuxième composants d'orientation est un composant femelle.

2. Ensemble tige de liaison principale (1) selon la revendication 1, dans lequel le composant mâle est une saillie.

3. Ensemble tige de liaison principale (1) selon la revendication 1, dans lequel la largeur du composant mâle est variable avec la distance à partir de la surface de l'élément de tige de liaison principale (2, 3) .

4. Ensemble tige de liaison principale (1) selon la revendication 3, dans lequel la largeur du composant mâle diminue avec l'augmentation de la distance à partir de la surface de l'élément de tige de liaison principale (2, 3).

5. Ensemble tige de liaison principale (1) selon la revendication 4, dans lequel le composant mâle a une forme de type cône tronqué.

6. Ensemble tige de liaison principale (1) selon la revendication 5, dans lequel un angle α entre les parois latérales du composant mâle est dans la plage allant d'environ 10 à environ 30 degrés, préférablement est d'environ 20 degrés.

7. Ensemble tige de liaison principale (1) selon la revendication 1, dans lequel le composant femelle est un renfoncement.

8. Ensemble tige de liaison principale (1) selon la revendication 1, dans lequel le composant femelle est un trou traversant.

9. Ensemble tige de liaison principale (1) selon la revendication 1, dans lequel la largeur du composant femelle est variable avec la distance à partir de la surface de l'élément de tige de liaison principale (2, 3) .

10. Ensemble tige de liaison principale (1) selon la revendication 9, dans lequel la largeur du composant femelle diminue avec l'augmentation de la distance jusqu'à l'intérieur de l'élément de tige de liaison principale (2, 3).

11. Ensemble tige de liaison principale (1) selon la revendication 10, dans lequel le composant femelle a une forme de type cône.

12. Ensemble tige de liaison principale (1) selon la revendication 11, dans lequel un angle β entre les parois latérales du composant femelle est dans la plage allant d'environ 50 à environ 70 degrés, préférablement est d'environ 60 degrés.

13. Ensemble tige de liaison principale (1) selon la revendication 1, dans lequel le composant femelle est allongé transversalement par rapport à la longueur de l'élément de tige de liaison principale (2, 3).

14. Ensemble tige de liaison principale (1) selon la revendication 1, dans lequel le composant mâle et le composant femelle sont conçus pour former une mise en prise à serrage maximal.

15. Système d'essuie-glace 11 comprenant l'ensemble tige de liaison principale (1) tel que spécifié dans les revendications 1 à 14.

16. Procédé pour assembler un ensemble tige de liaison principale (1) pour un système d'essuie-glace, l'ensemble tige de liaison principale comprenant un premier élément de tige de liaison principale (2) et un deuxième élément de tige de liaison principale (3), les premier et deuxième éléments de tige de liaison principale (2, 3) étant raccordés avec au moins un moyen d'assujettissement (4) et au moins un moyen d'orientation pour définir une orientation spatiale entre le premier élément de tige de liaison principale (2) et le deuxième élément de tige de liaison principale (3), le moyen d'orientation comprenant un premier composant d'orientation (5) compris dans le premier élément de tige de liaison principale (2) et un deuxième composant d'orientation (6) compris dans le deuxième élément de tige de liaison principale (3), l'un des premier et deuxième composants d'orientation (5, 6) étant un composant mâle et l'autre des premier et deuxième composants d'orientation (5, 6) étant un composant femelle, le procédé comprenant les étapes suivantes
fournir les premier et deuxième éléments de tige de liaison principale (2, 3),
rassembler les premier et deuxième éléments de tige de liaison principale (2, 3) et mettre en prise le moyen d'orientation pour définir l'orientation spatiale entre le premier élément de tige de liaison principale (2) et le deuxième élément de tige de liaison principale (3), fixer le moyen d'assujettissement (4) pour joindre le premier élément de tige de liaison principale (2) et le deuxième élément de tige de liaison principale et arrêter leur orientation spatiale.

17. Procédé pour assembler un ensemble tige de liaison principale selon la revendication 16, dans lequel l'étape consistant à rassembler les premier et deuxième éléments de tige de liaison principale (2, 3) et à mettre en prise le moyen d'orientation comprend
le fait de placer les premier et deuxième éléments de tige de liaison principale (2, 3) longitudinalement l'un à côté de l'autre, le premier élément de tige de liaison principale (2) étant au-dessus du deuxième élément de tige de liaison principale (3) et le moyen d'orientation étant à proximité,
le fait de déplacer longitudinalement au moins un des premier et deuxième éléments de tige de liaison principale (2, 3) par rapport à un autre pour positionner le moyen d'orientation,
le fait de mettre en prise le moyen d'orientation pour définir l'orientation spatiale entre le premier élément de tige de liaison principale (2) et le deuxième élément de tige de liaison principale (3).

18. Procédé pour assembler un ensemble tige de liaison principale selon la revendication 16, dans lequel entre l'étape consistant à fournir les premier et deuxième éléments de tige de liaison principale (2, 3) et l'étape consistant à rassembler les premier et deuxième éléments de tige de liaison principale (2, 3) et à mettre en prise le moyen d'orientation, le procédé comprend une étape consistant à fixer préalablement les premier et deuxième éléments de tige de liaison principale (2, 3) avec le moyen d'assujettissement (4) pour limiter la plage de déplacement des premier et deuxième éléments de tige de liaison principale (2, 3) l'un par rapport à l'autre.
